# EUROPEAN PATENT SPECIFICATION

(11) **EP 3 572 297 B1**
(45) Date of publication and mention of the grant of the patent: **27.04.2022**
(21) Application number: 19175412.6
(22) Date of filing: 20.05.2019
(51) Int. Cl.: B62B 1/24

(54) **WHEELBARROW WITH TIP UP TRAY**
SCHUBKARRE MIT KIPPSCHALE
BROUETTE À PLATEAU BASCULANT

(30) Priority: 18.05.2018 NL 2020961
(43) Date of publication of application: 27.11.2019
(73) Proprietor: Oosterwijk, Hermanus Henricus Maria, 7434 RA Lettele (NL); Oosterwijk, Jesse Johannes Gerhardus, 7434 RA Lettele (NL); Oosterwijk, Jari Hermanus Henricus, 7434 RA XX Bathmen (NL)
(72) Inventor: Oosterwijk, Hermanus Henricus Maria, 7434 RA Lettele (NL); Oosterwijk, Jesse Johannes Gerhardus, 7434 RA Lettele (NL); Oosterwijk, Jari Hermanus Henricus, 7434 RA XX Bathmen (NL)
(74) Representative: V.O.

(56) References cited:
- US-A- 1 727 271
- US-A- 1 804 403
- US-A- 1 804 404
- US-A- 2 037 222
- US-A1- 2013 062 844

## Description

### FIELD AND BACKGROUND OF THE INVENTION

The invention relates to a wheelbarrow. A wheelbarrow is known from U.S. patent 2 482 608 and from German patent application 1 724 687.

In such wheelbarrows, the tray is pivotable relative to a chassis about a pivot axis forward of the axis of rotation of the wheels. Starting from a position of the wheelbarrow in which the chassis is tipped forward and in which a front end of the tray, in its load carrying position, is in abutment with the ground, the tray can be caused to tip up further by tilting the chassis backward about the axis of rotation of the wheels. Thus, a load can be dumped from the tray very easily. Initially the tray is tipped up by tilting the whole wheelbarrow forward and subsequently the tray is tipped further by tilting the chassis of the wheelbarrow backward again.

However, the second stage of tipping up is not achieved reliably, the tipping angle of the second stage is limited and/or a large force has to be exerted to achieve the second stage of tipping. Moreover, when bulk material or one or more items to be transported has or have been loaded into the forwardly tipped tray, tipping the wheelbarrow back to its transport or rest position with the tray in its load carrying position cannot reliably be achieved by just tilting the chassis backward again.

US 1 804 403 A discloses a wheelbarrow according to the precharacterizing portion of the appended independent claim 1.

### SUMMARY OF THE INVENTION

It is an object of the present invention to provide a wheelbarrow of which the tipping up of the tray relative to the chassis for dumping a load and tipping back of a loaded tray in unison with backward tilting of the chassis can be operated at least more easily or more reliably.

The present invention provides a wheelbarrow according to the appended independent claim 1. The present invention further provides a method of using such a wheelbarrow according to the appended independent claim 7, as well as a method of using such a wheelbarrow according to the appended independent claim 8. Preferable embodiments of the invention are provided by the appended dependent claims 2-6.

Because the tray is provided with a guide for allowing guided displacement of the pivot axis along the tray between a first position and a second position, the pivot axis being in the first position if the tray is in the load carrying position and the second position is rearward from the first position, the pivot axis can be displaced relative to the center of gravity of the tray and any load held therein. This allows reliably effecting either forward or backward tilting of the tray by vertical movement of the pivot axis, regardless whether or to what extent initial tipping of the tray has resulted in displacement of the load and, accordingly, of its center of gravity. Moreover, the chassis can project relatively far forward from the axis of rotation of the wheel or wheels towards the pivot axis, so that a relatively small amount of tilting of the chassis about the axis of rotation of the wheel or wheels can result in a substantial amount of tilting of the tray. This also allows the chassis to extend at a relatively low level above the ground, so that the center of gravity of the wheelbarrow in transport position can be relatively low and preventing undesired tipping of the wheelbarrow requires relatively little effort.

Further features, effects and details of the invention appear from the detailed description and the drawings.

### BRIEF DESCRIPTION OF THE DRAWINGS

Figs. 1-4 are schematic side views of an example of a wheelbarrow according to the invention in successive stages of operation; and
Fig. 5 is a perspective view of a second example of a wheelbarrow according to the invention.

### DETAILED DESCRIPTION

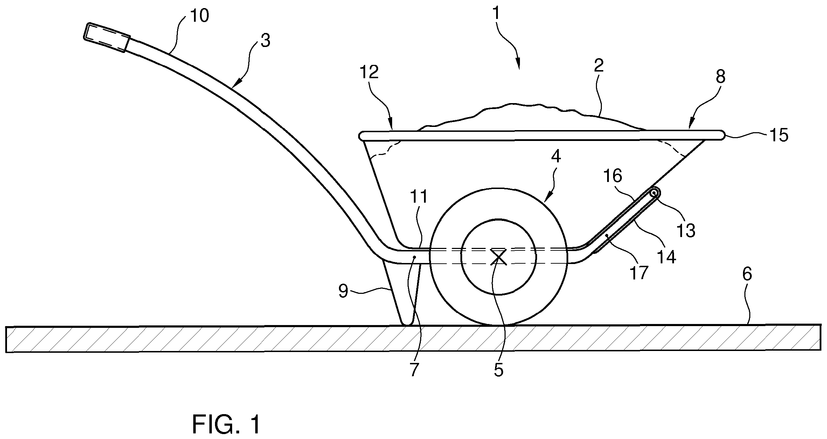

In the drawings, a wheelbarrow 1 is shown in four consecutive stages of operation during dumping of a load 2 (shown in Fig. 1 only).

The wheelbarrow 1 has a chassis 3 to which wheels 4 are mounted for rotation of the wheels 4 about a center line 5 of the wheels 4, which center line thus constitutes the axis of rotation of the wheels 4. The wheels 4 are thus suspended to allow rolling of the wheels 4 over a ground surface 6 while supporting the chassis 3 spaced from the ground surface 6.

The chassis 3 has a tray support portion 7, on which a tray 8 of the wheelbarrow 1 rests when in a load carrying position relative to the chassis 3.

The chassis 3 further has support legs 9. If the wheelbarrow 1 is in a rest position as shown in Fig. 1, the support legs 9 are rearward of the wheels 4 and extend downwardly for resting on the ground 6 supporting the wheelbarrow 1 rearward of the wheels 4. If the wheelbarrow 1 is in a transport position, which allows rolling the wheelbarrow 1 without the support legs 9 dragging over the ground 6, the support legs 9 are also rearward of the wheels 4 but the wheelbarrow 1 is tilted slightly about the axis of rotation 5 so that the support legs are spaced from the ground 6. Instead of two support legs 9, the chassis 3 may also have a single support leg or more than two support legs. If a single support leg is provided, it is advantageous for stability of the wheelbarrow 1 in its rest position, if the support leg has a foot of a substantial width in a direction transverse to the forward and rearward rolling directions of the wheel or wheels.

The chassis 3 further has handlebars 10 which project in a direction rearward and upward from the tray support portion 7 if the wheelbarrow 1 is in the transport position.

The tray 8 has a bottom 11 and an open top 12 for loading material to be transported into the tray 8 and dumping the transported material from the tray 8. Depending on the desired application, a removable lid may be provided for closing off the tray 8.

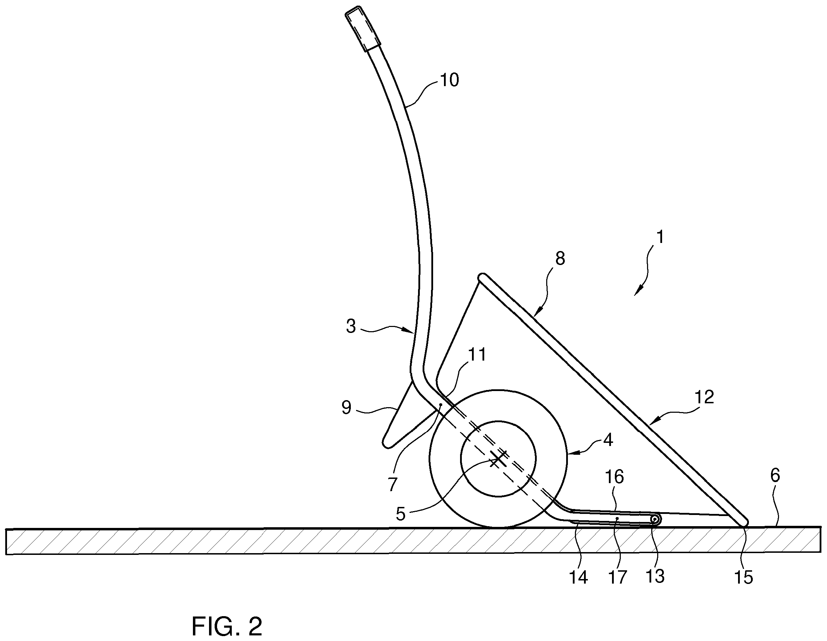

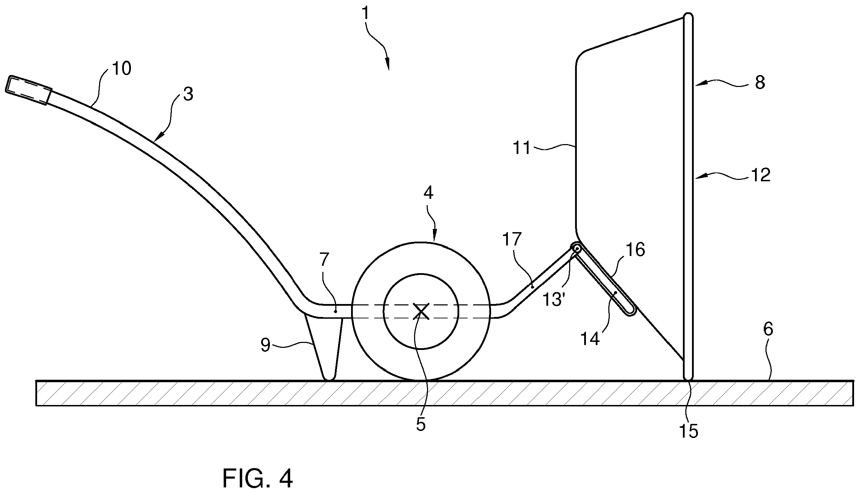

The tray 8 is coupled to the chassis 3 so as to be pivotable relative to the chassis 3 about a pivot axis 13 forwardly of the center line 5 of the wheels 4, from a load carrying position in which the bottom 11 is closely adjacent to the tray support portion 7 of the chassis 3 (see Figs. 1 and 2) to a dumping position in which the bottom 11 is pivoted away from the tray support portion 7 of the chassis 3 for the dumping of the transported material (see Fig. 4). In the present example, the pivot axis is located forwardly of the wheels 4, which is advantageous for increasing lever arm length of the chassis 3 forwardly of the axis of rotation 5 of the wheels 4.

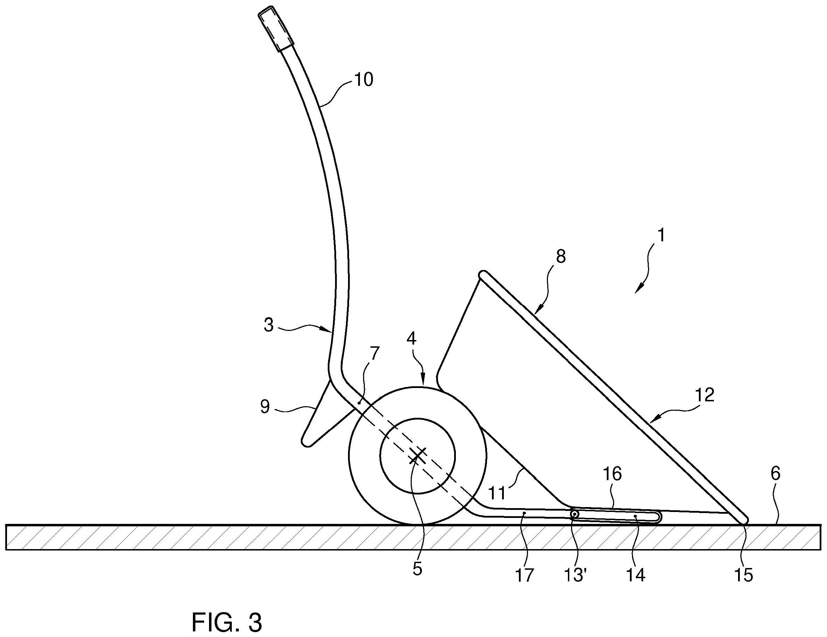

The tray 8 is further provided with a guide 14 for allowing guided displacement of the pivot axis 13 along the tray 8 between a first position (Figs. 1 and 2) and a second position (Figs. 3 and 4). As shown in Figs. 1 and 2, the pivot axis 13 is in the first position if the tray 8 is in the load carrying position. As can be seen when comparing Figs. 3 and 4 with Figs. 1 and 2, the second position of the pivot axis 13' is more rearward relative to the tray 8 than the first position of the pivot axis 13.

In use, a load of bulk material 2 or one or more items loaded into the tray 8 can be transported to location where the bulk material 2 is to be dumped. During transport of the load in the tray 8, the wheelbarrow 1 is held in the transport position, which is slightly tilted forward compared with the rest position shown in Fig. 1. In the transport position, the wheels 4 resting on the ground surface 6, the handle bars 10 are held by a user and the tray 8 is in the load carrying position shown in Figs. 1 and 2.

When the destination of the transported load has been reached, the wheelbarrow 1 is tilted forward about the axis of rotation 5 of the wheels 4 by lifting the handle bars 10, preferably until a front end 15 of the wheelbarrow 1 abuts against the ground surface 6, so that a position as shown in Fig. 2 is reached. If an item, e.g. a newborn calf, is transported, it can be shifted out of the tray 8 in this position. However, in this position, the tray 8 is tipped over to some extent, but not enough to dump all bulk material 2 out of the tray 8.

For completing the dumping of the bulk material, next, the chassis 3 is rolled backward causing the pivot axis 13 to move from the first position 13 to the second position 13', so that a position as shown in Fig. 3 is reached. Typically, the tray 8 will not move backward with the chassis 3, because the front end of the tray 8 rests on the ground 6, so that no special measures for preventing the tray 8 from moving backward with the chassis are required.

Then, by tilting the chassis 3 backward about the axis of rotation 5 of the wheels 4, by urging the handle bars 10 downwards, the pivot axis 13 is lifted away from the ground surface 6, this does in turn cause the tray 8 to pivot forward, away from the tray support portion 7 of the chassis 3, so that a position as shown in Fig. 4 is reached. In that position, the tray 8 is tipped over a large angle, so that a forward end wall 16 of the tray 8 is brought into a steep inclination from the bottom 11 towards a top end of the front end wall 16. Accordingly, the bulk material left in the tray 8 reliably slides out of the tray 8 and is deposited in front of the tray 8.

Because the second position of the pivot axis 13' is rearward from the first position of the pivot axis 13, the pivot axis can be displaced relative to the center of gravity of the tray 8 and any load 2 held therein. This allows reliably effecting either forward or backward tilting of the tray 8 by vertical movement of the pivot axis 13, regardless whether or to what extent initial tipping of the tray 8 has resulted in displacement of the load 2 and accordingly its center of gravity. If the pivot axis 13 is in the forward first position, the tray 8 will reliably tilt in unison with the chassis 3. In contrast, if the pivot axis 13 is in the rearward second position, the tray 8 will reliably tilt in a sense opposite to the sense in which the chassis 3 is tilted. Thus, initial tipping of the tray 8 with the chassis 3 from a transport position and tipping back of the chassis 3 with the tray 8 to a transport position is reliably controlled by tilting the handle bars 10 with the pivot axis in the first position and subsequent tipping of the tray for emptying and tipping back after emptying is reliably controlled by tilting the handle bars 10 with the pivot axis 13 in the second position.

Moreover, the chassis 3 can be dimensioned to project relatively far forward from the axis of rotation 5 of the wheels towards the pivot axis 13, so that a relatively small amount of tilting of the chassis 3 about the axis of rotation 5 of the wheels is sufficient for obtaining a substantial amount of tipping of the tray 8 during the subsequent stage of tipping. Also, because little ground clearance is needed for allowing tilting of the chassis, the chassis 3 can be dimensioned to extend at a relatively low level above the ground 6, so that the center of gravity of the wheelbarrow 1 in transport position can be relatively low. Preventing undesired tipping of the wheelbarrow 1 then requires relatively little effort.

Also collecting and then transporting items or bulk material is facilitated by a wheelbarrow according to the invention. Bulk material or an item, such as a newborn calf, can be loaded into the tray particularly easily if the tray 8 is tilted away from the tray support portion 7 of the chassis 3 with the forward end wall 16 extending substantially horizontally along the ground surface 6. Thus, the item or bulk material does not have to be lifted more than over the thickness of the upper end of the forward end wall 16 to transfer it from the ground surface 6 into the tray 8. More in particular, the item or bulk material can generally be shoved from the ground surface 6 into the tray 8 and bulk material can also be swept into the tray.

By then rolling the chassis 3 forward, the pivot axis 13 is moved from the second position to the first position. With the pivot axis 13 in the first position, backward tilting of the chassis 3 about the axis of rotation 5 of the wheels 4 by urging the handle bars 10 downwards until the wheelbarrow 1 is in the transport position reliably results in tipping back the tray 8 in unison with the chassis 3. Thus, tipping back the tray 8 into an upright position after one or more items or bulk material has been loaded into the tray 8 in a forward tipped position can easily be carried out by operating the handle bars 10 and no separate operation of tipping back the tray 8 is required.

For ease of use, it is further advantageous if, as in the present example, in relation to the tray 8 in the load carrying position on a wheelbarrow 1 in the rest position, the second position is also downward from the first position. This allows moving the pivot axis between the first and second positions, while the tray is in the forward tipped position, with relatively little tilting of the chassis. Moreover, such an inclined orientation of the guide trajectory along which the pivot axis is guided, ensures that the pivot axis reliably stays in the first position if the wheelbarrow is in the transport position, even when riding over bumps or suddenly accelerating or decelerating.

For ease of dumping bulk material and for ease of loading one or more items or bulk material into a forward tipped tray, the forward end wall 16 of the tray 8 extends outwardly inclined from its bottom end to its top end. Because forward end wall 16 is outwardly inclined tipping over a relatively small angle is sufficient for tipping the tray 8 between, on the one hand, an upright position and, on the other hand, a sloping position for dumping bulk material or a position about parallel to the ground surface 6 for easy loading of one or more items or bulk material.

The forward end wall 16 is inclined and positioned such that, seen in side view, a downward continuation of an outer surface of the forward end wall 16 extends closely along an outer circumference of the wheels 4. Thus, when the wheelbarrow 1 is tilted forward until the forward end wall 16 abuts against the ground surface 6, the forward end wall 16 is parallel to the ground surface 6, which facilitates loading of one or more items or bulk material into the tray 8. Depending on the configuration of the chassis, the guide and the tray this may involve a slight tilting of the chassis, but in the wheelbarrow according to the present example tilting of the chassis is not required for bringing the tray 8 into the load carrying position relative to the chassis 3, because the guide 14 for allowing guided displacement of the pivot axis 13 extends substantially parallel to the forward end wall 16.

If, as in the present example, the guide 14 for allowing guided displacement of the pivot axis 13 is mounted to outside of the forward end wall 16, the guide 14 can be mounted to the tray 8 in a simple manner and a robust support for the forward end wall 16 is provided.

For obtaining a simple construction, it is then advantageous that the chassis 3 has a front end 17 extending to the pivot axis 13 along the outside of the forward end wall 16 when the tray 8 is in its transport position.

The wheelbarrow 1 according to the present example has two wheels 4 on opposite sides of the tray 8 and the chassis 3 and rotatable about a common axis of rotation 5. This is advantageous for stability when navigating the wheelbarrow 1, in particular when transporting a heavy load 2 and allows the provision of large wheels without accordingly raising the ride height of the tray 8 above the ground 6. However, within the framework of the invention, a wheelbarrow may also be provided with a single wheel only or with more than two wheels, e.g. additional wheels at lower ends of the support legs wheels and/or additional wheels between the front wheels for reducing track formation in soft ground.

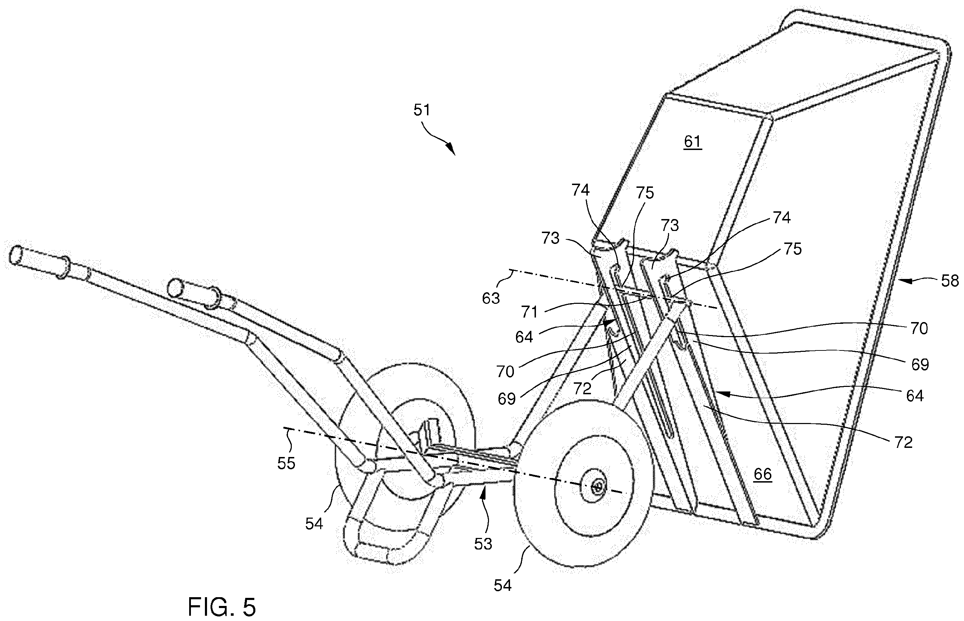

In the wheelbarrow 51 according to Fig. 5, the guides 64 for allowing guided displacement of the pivot axis 63 along the tray 58 is in the form of a pair of webs 69 each extending in a longitudinal direction along the forward end wall 66 of the tray 58 and each projecting transversely (in this example perpendicularly) from the forward end wall 66 of the tray 58. In each of the webs 69 a guide slot 70 is provided in which a pivot member 71 of the chassis 53 is received. In this example, the pivot member is a bar 71 oriented parallel to the axis of rotation 55 of the wheels 54. However, other forms of pivot members, such as knobs projecting through the slot with heads or flanges for keeping the knobs in engagement with the webs, are also conceivable.

In this example, the webs 69 are integrally formed with the tray 58. It is however also possible to provide the webs in the form of a web of a profile mounted to the tray, for instance by fasteners and/or by locking engagement with engagement portions on the outside of the forward end wall of the tray.

The slots 70 for guiding displacement of the pivot axis 63 along the tray 58 extend substantially parallel to the forward end wall 66. The guide slots 70 substantially parallel to the forward end wall 66 can be oriented at a slight angle of preferably less than 10° relative to the forward end wall 66. In order of increasing preference, this angle is smaller than 8° or 6° and for instance 4° as in the present example.

On sides of the webs 69 facing away from the forward end wall 66, anti-pivot guides 72 project from the webs 69 at the sides of the webs where the pivot members 71 and front end arms 67 of the chassis 53 extending to the pivot members 71 are located. The anti-pivot guides 72 preferably end in downward and backward direction at approximately 10 to 30 % of the length of the guides 64 so as to engage the pivot member 71 or the front end arms 67 of the chassis 53 unless the pivot axis 63 has been moved nearly completely towards rearward and bottom ends of the guide slots 70. Thus, the anti-pivot guides prevent the tray 58 from tilting forwardly relative to chassis 53 unless the pivot axis 63 has been moved nearly completely towards the rearward and bottom ends of the guide slots 70.

The anti-pivot guides are provided in the form of flanges 72 that each extend from near the lower bottom end of the associated guide slot 72 to the upper forward end of the associated guide slot 70. The flanges 72 keep the pivot members 71 clear from a ground surface on which wheelbarrow rests if the wheelbarrow is tilted forward. This avoids jamming of the pivot member 71 against terrain bumps or obstacles like stones on the ground when shifting the chassis 53 relative to a forwardly tilted tray 58, in particular when shifting the chassis 53 from the rearward position as shown in Fig. 3 to the forward position as shown in Fig. 2.

At the transition from the forward end wall 66 to the bottom 61 of the tray 58, supports 73 project beyond a lower rearward end of the forward end wall 66. These supports 73 counteract rearward tilting of the tray 58 when it is being filled while resting on a ground surface in a forwardly tilted orientation with the chassis rearwardly retracted as shown in Fig. 3.

For retaining the pivot member 71 in a rearward and downward position in the guide slots 70, the guide slots 70 are provided with notches 74, 75 shaped and dimensioned for at least partially receiving at least the pivot member 71. Because the slots 71 are each provided with two of these notches, the pivot member 71 can be held in two different positions in the slots 70 during tilting, for allowing a choice between, in a light load discharging mode, quick tilting over a large angle or, in a heavy load discharging mode, slower tilting over a smaller angle requiring less force to be exerted on the chassis 53 than tilting in the light load mode.

## Claims

1. A wheelbarrow (1) comprising:
a chassis (3) to which at least one wheel (4) is mounted for rotation of said at least one wheel about a center line (5) of said at least one wheel for allowing rolling of said at least one wheel over a ground surface while supporting said chassis spaced from said ground surface, the chassis (3) having:
• a tray support portion (7);
• at least one handlebar (10), wherein, if the wheelbarrow (1) is in a transport position, the at least one handlebar projects in a direction rearward and upward from said tray support portion (7); and
• at least one support leg (9), wherein, if the wheelbarrow (1) is in a rest position, said support leg is rearward of said at least one wheel and extends downwardly for resting on the ground supporting the wheelbarrow rearward of the at least one wheel and wherein, if the wheelbarrow is in said transport position, said support leg is rearward of said at least one wheel and spaced from the ground; and a tray (8) for holding a load, said tray having:
• a bottom (11);
• an open top (12) for loading material to be transported into the tray and dumping the transported material from the tray;
wherein said tray (8) is pivotable relative to said chassis (3) about a pivot axis (13) forwardly of said center line (5) of said at least one wheel, from a load carrying position in which said bottom (11) is closely adjacent to said tray support portion (7) to a dumping position in which said bottom (11) is pivoted away from said tray support portion (7) for said dumping of the transported material and vice versa;
and wherein said tray is provided with a guide (14) for allowing guided displacement of said pivot axis (13) along said tray between a first position and a second position, said pivot axis (13) being in said first position if said tray (8) is in said load carrying position, and
relative to said tray (8), said second position of said pivot axis (13) is rearward from said first position of said pivot axis;
and wherein said tray (8) has a forward end wall (16) having a bottom end and a top end and extending outwardly inclined from said bottom end to said top end;
**characterized in that**
said guide (14) for allowing guided displacement of said pivot axis (13) extends substantially parallel to said forward end wall (16);
and wherein, in relation to said tray (8) in said load carrying position on a wheelbarrow in said rest position, said second position is also downward from said first position.

2. A wheelbarrow according to claim 1, wherein said forward end wall (16) is inclined and positioned such that, seen in side view, a downward continuation of an outer surface of said forward end extends closely along an outer circumference of said at least one wheel (4).

3. A wheelbarrow according to claim 1 or 2, wherein said guide (14) for allowing guided displacement of said pivot axis (13) is mounted to an outside of said forward end wall (16).

4. A wheelbarrow according to claim 3, wherein said chassis (3) comprises a forward end (17) extending to said pivot axis (13) along said outside of said forward end wall (16) when the tray (8) is in its transport position.

5. A wheelbarrow according to any of the preceding claims, having two of said wheels (4) on opposite sides of said tray (8) and rotatable about a common axis of rotation (5).

6. A wheelbarrow according to any of the preceding claims, wherein said pivot axis (13) is located forwardly of the at least one wheel (4).

7. A method of using a wheelbarrow (1) according to any of the preceding claims, comprising:
transporting a load of bulk material (2) in said tray (8), said wheelbarrow being in said transport position, said at least one wheel (4) resting on a ground surface (6) and said handle bars (10) being held by a user, and said tray being in said load carrying position;
dumping said load of bulk material (2) by:
tilting said wheelbarrow (1) forward about said axis of rotation (5) of said at least one wheel (4) by lifting said handle bars until a forward end (15) of said wheelbarrow abuts against said ground surface (6);
rolling said chassis (3) backward causing said pivot axis (13) to move from said first position to said second position; and
tilting said chassis (3) backward about said axis of rotation (5) of said at least one wheel (4) by urging said handle bars (10) downwards causing said pivot axis (13) to be lifted away from said ground surface (6), thereby causing said tray (8) to pivot forward, away from said tray support portion (7) of said chassis (3).

8. A method of using a wheelbarrow (1) according to any of the claims 1-6, comprising:
loading bulk material (2) into said tray (8), said tray being tilted away from said tray support portion (7) with said forward end wall (16) extending substantially horizontally along the ground (6);
rolling said chassis (3) forward causing said pivot axis (13) to move from said second position to said first position; and
tilting said chassis (3) backward about said axis of rotation (5) of said at least one wheel (4) by urging said handle bars (10) downwards until the wheelbarrow (1) is in said transport position.

## Patentansprüche

1. Schubkarre (1), umfassend:
ein Fahrgestell (3), an dem wenigstens ein Rad (4) zum Drehen des wenigstens einen Rads um eine Mittellinie (5) des wenigstens einen Rads montiert ist, um das Rollen des wenigstens einen Rads über eine Bodenfläche zu ermöglichen, während das Fahrgestell in einem Abstand von der Bodenfläche gestützt wird, wobei das Fahrgestell (3) aufweist:
• einen Schalenstützabschnitt (7);
• wenigstens eine Lenkstange (10), wobei, wenn sich die Schubkarre (1) in einer Transportposition befindet, die wenigstens eine Lenkstange in einer Richtung nach hinten und nach oben aus dem Schalenstützabschnitt (7) vorsteht; und
• wenigstens ein Stützbein (9), wobei, wenn sich die Schubkarre (1) in einer Ruheposition befindet, das Stützbein sich hinter dem wenigstens einen Rad befindet und sich nach unten erstreckt, um auf dem Boden aufzu liegen, um die Schubkarre hinter dem wenigstens einen Rad abzustützen, und wobei, wenn sich die Schubkarre in der Transportposition befindet, das Stützbein sich hinter dem wenigstens einen Rad und vom Boden in einem Abstand befindet; und
eine Schale (8) zur Aufnahme einer Ladung, wobei die Schale aufweist:
• einen Boden (11);
• eine offene Oberseite (12) zum Beladen der Schale mit zu transportierendem Material und zum Auskippen des zu transportierenden Materials aus der Schale;
wobei die Schale (8) relativ zu dem Fahrgestell (3) um eine Schwenkachse (13) vor der Mittellinie (5) des wenigstens einen Rades aus einer Lasttrageposition, in der der Boden (11) eng an den Schalenstützabschnitt (7) angrenzt, in eine Kippposition schwenkbar ist, in der der Boden (11) für das Auskippen des tu transportierenden Materials von dem Schalenstützabschnitt (7) weggeschwenkt ist und umgekehrt;
und wobei die Schale mit einer Führung (14) versehen ist, um eine geführte Verschiebung der Schwenkachse (13) entlang der Schale zwischen einer ersten Position und einer zweiten Position zu ermöglichen, wobei sich die Schwenkachse (13) in der ersten Position befindet, wenn sich die Schale (8) in der Lasttrageposition befindet, und
relativ zu der Schale (8) sich die zweite Position der Schwenkachse (13) von der ersten Position der Schwenkachse nach hinten befindet;
und wobei die Schale (8) eine vordere Endwand (16) aufweist, die ein unteres Ende und ein oberes Ende aufweist und sich von dem unteren Ende zu dem oberen Ende nach außen geneigt erstreckt;
**dadurch gekennzeichnet, dass**
die Führung (14), die eine geführte Verschiebung der Schwenkachse (13) ermöglicht, sich im Wesentlichen parallel zur vorderen Endwand (16) erstreckt;
und wobei in Bezug auf die Schale (8) in der Lasttrageposition auf einer Schubkarre in der Ruheposition die zweite Position ebenfalls von der ersten Position nach unten gerichtet ist.

2. Schubkarre nach Anspruch 1, wobei die vordere Endwand (16) geneigt und so positioniert ist, dass sich, in der Seitenansicht gesehen, eine nach unten gerichtete Fortsetzung einer Außenfläche des vorderen Endes eng entlang eines Außenumfangs des wenigstens einen Rades (4) erstreckt.

3. Schubkarre nach Anspruch 1 oder 2, wobei die Führung (14), die eine geführte Verschiebung der Schwenkachse (13) ermöglicht, an einer Außenseite der vorderen Endwand (16) montiert ist.

4. Schubkarre nach Anspruch 3, wobei das Fahrgestell (3) ein vorderes Ende (17) umfasst, das sich zu der Schwenkachse (13) entlang der Außenseite der vorderen Endwand (16) erstreckt, wenn sich die Schale (8) in ihrer Transportposition befindet.

5. Schubkarre nach einem der vorhergehenden Ansprüche, wobei sich zwei der Räder (4) auf gegenüberliegenden Seiten der Schale (8) befinden und um eine gemeinsame Drehachse (5) drehbar sind.

6. Schubkarre nach einem der vorhergehenden Ansprüche, wobei sich die Schwenkachse (13) vor dem wenigstens einen Rad (4) befindet ist.

7. Verfahren zur Verwendung einer Schubkarre (1) nach einem der vorhergehenden Ansprüche, umfassend:
Transportieren einer Ladung von Schüttgut (2) in der Schale (8), wobei sich die Schubkarre in der Transportposition befindet, das wenigstens eine Rad (4) auf einer Bodenfläche (6) aufliegt und die Lenkstangen (10) von einem Benutzer gehalten werden, und wobei sich die Schale in der Lasttrageposition befindet;
Auskippen der Ladung von Schüttgut (2) durch:
das Kippen der Schubkarre (1) nach vorne um die Drehachse (5) des wenigstens einen Rades (4) durch Anheben der Lenkstangen, bis ein vorderes Ende (15) der Schubkarre gegen die Bodenfläche (6) stößt;
Rollen des Fahrgestells (3) nach hinten, das bewirkt, dass die Schwenkachse (13) von der ersten Position in die zweite Position bewegt wird; und
Kippen des Fahrgestells (3) nach hinten um die Drehachse (5) des wenigstens einen Rades (4), indem die Lenkstangen (10) nach unten gedrückt werden, wodurch die Schwenkachse (13) von der Bodenfläche (6) weggehoben wird, wodurch die Schale (8) nach vorne geschwenkt wird, weg von dem Schalenstützabschnitt (7) des Fahrgestells (3).

8. Verfahren zur Verwendung einer Schubkarre (1) nach einem der Ansprüche 1 bis 6, umfassend:
Beladen der Schale (8) mit Schüttgut (2), wobei die Schale von dem Schalenstützabschnitt (7) weggekippt ist und sich die vordere Endwand (16) im Wesentlichen horizontal entlang des Bodens (6) erstreckt;
Vorwärtsrollen des Fahrgestells (3), das bewirkt, dass die Schwenkachse (13) von der zweiten Position in die erste Position bewegt wird; und
Kippen des Fahrgestells (3) nach hinten um die Drehachse (5) des wenigstens einen Rades (4), indem die Lenkstangen (10) nach unten gedrückt werden, bis sich die Schubkarre (1) in der Transportposition befindet.

## Revendications

1. Brouette (1) comprenant :
un châssis (3) sur lequel est montée au moins une roue (4) pour une rotation de ladite au moins une roue autour d'une ligne centrale (5) de ladite au moins une roue, afin de permettre le roulement de ladite au moins une roue sur la surface d'un sol tout en supportant ledit châssis éloigné de ladite surface du sol, le châssis (3) présentant :
• une partie support de plateau (7) ;
• au moins un brancard (10), dans laquelle, si la brouette (1) se trouve dans la position de transport, l'un au moins des brancards fait saillie dans la direction vers l'arrière et vers le haut à partir de ladite partie support de plateau (7) ; et
• au moins une jambe de support (9), dans laquelle, si la brouette (1) se trouve dans la position de repos, ladite jambe de support est en arrière de l'une au moins desdites roues, et s'étend vers le bas afin de reposer sur le sol en supportant la brouette en l'arrière de l'une au moins desdites roues, et dans laquelle, si la brouette se trouve dans ladite position de transport, ladite jambe de support est en arrière de l'une au moins desdites roues, et est éloignée du sol ; et
un plateau (8) destiné à contenir une charge, ledit plateau présentant :
• un fond (11) ;
• un dessus ouvert (12) destiné à charger un matériau à transporter dans le plateau, et à déverser le matériau transporté hors du plateau ;
dans laquelle ledit plateau (8) peut pivoter par rapport audit châssis (3) autour d'un axe de pivot (13) en avant de ladite ligne centrale (5) de l'une au moins desdites roues, à partir d'une position de transport de charge dans laquelle ledit fond (11) est extrêmement proche de ladite partie support de plateau (7), vers une position de déversement dans laquelle ledit fond (11) pivote à partir de ladite partie support de plateau (7) afin de déverser ledit matériau transporté, et vice versa ;
et dans laquelle ledit plateau est doté d'un dispositif de guidage (14) destiné à permettre un déplacement guidé dudit axe de pivot (13) le long dudit plateau, entre une première position et une seconde position, ledit axe de pivot (13) se trouvant dans ladite première position si ledit plateau (8) se trouve dans ladite position de transport de charge, et
par rapport audit plateau (8), ladite seconde position dudit axe de pivot (13) est en arrière par rapport à ladite première position dudit axe de pivot ;
et dans laquelle ledit plateau (8) présente une paroi d'extrémité avant (16) qui présente une extrémité inférieure et une extrémité supérieure, et qui s'étend vers l'extérieur en étant inclinée à partir de ladite extrémité inférieure vers ladite extrémité supérieure ;
**caractérisée en ce que**
ledit dispositif de guidage (14) destiné à permettre un déplacement guidé dudit axe de pivot (13), s'étend sensiblement parallèle à ladite paroi d'extrémité avant (16) ;
et dans laquelle, par rapport audit plateau (8) dans ladite position de transport de charge sur une brouette dans ladite position de repos, ladite seconde position est également en dessous de ladite première position.

2. Brouette selon la revendication 1, dans laquelle ladite paroi d'extrémité avant (16) est inclinée, et est positionnée de telle sorte que, dans une vue de côté, une prolongation vers le bas de la surface extérieure de ladite extrémité avant, s'étende de près le long de la circonférence extérieure de l'une au moins desdites roues (4).

3. Brouette selon la revendication 1 ou 2, dans laquelle ledit dispositif de guidage (14) destiné à permettre un déplacement guidé dudit axe de pivot (13), est monté sur l'extérieur de ladite paroi d'extrémité avant (16).

4. Brouette selon la revendication 3, dans laquelle ledit châssis (3) comprend une extrémité avant (17) qui s'étend vers ledit axe de pivot (13) le long dudit extérieur de ladite paroi d'extrémité avant (16) lorsque le plateau (8) se trouve dans sa position de transport.

5. Brouette selon l'une quelconque des revendications précédentes, présentant deux desdites roues (4) sur des bords opposés dudit plateau (8), et pouvant tourner autour d'un axe de rotation commun (5).

6. Brouette selon l'une quelconque des revendications précédentes, dans laquelle ledit axe de pivot (13) se situe en avant de l'une au moins des roues (4).

7. Procédé destiné à utiliser une brouette (1) selon l'une quelconque des revendications précédentes, comprenant les étapes suivantes :
transporter un chargement de matériau en vrac (2) dans ledit plateau (8), dans lequel ladite brouette se trouve dans ladite position de transport, l'une au moins desdites roues (4) reposant sur la surface d'un sol (6), et lesdits brancards (10) étant tenus par un utilisateur, et ledit plateau se trouvant dans ladite position de transport de charge ;
déverser ledit chargement de matériau en vrac (2) en :
inclinant ladite brouette (1) vers l'avant autour dudit axe de rotation (5) de l'une au moins desdites roues (4) en levant lesdits brancards jusqu'à ce qu'une extrémité avant (15) de ladite brouette vienne en butée contre ladite surface du sol (6) ;
faisant rouler ledit châssis (3) vers l'arrière, ce qui provoque le déplacement dudit axe de pivot (13) à partir de ladite première position vers ladite seconde position ; et
inclinant ledit châssis (3) vers l'arrière autour dudit axe de rotation (5) de l'une au moins desdites roues (4) en abaissant lesdits brancards (10), ce qui provoque la levée dudit axe de pivot (13) à partir de ladite surface du sol (6), ce qui provoque de ce fait le pivotement dudit plateau (8) vers l'avant, à partir de ladite partie support de plateau (7) dudit châssis (3).

8. Procédé destiné à utiliser une brouette (1) selon l'une quelconque des revendications 1 à 6, comprenant les étapes suivantes :
charger un matériau en vrac (2) dans ledit plateau (8), ledit plateau étant incliné à partir de ladite partie support de plateau (7), ladite paroi d'extrémité avant (16) s'étendant sensiblement horizontalement le long du sol (6) ;
faire rouler ledit châssis (3) vers l'avant, ce qui provoque le déplacement dudit axe de pivot (13) à partir de ladite seconde position vers ladite première position ; et
incliner ledit châssis (3) vers l'arrière autour dudit axe de rotation (5) de l'une au moins desdites roues (4) en abaissant lesdits brancards (10) jusqu'à ce que la brouette (1) se trouve dans ladite position de transport.
